# EUROPEAN PATENT SPECIFICATION

(11) **EP 3 076 640 B1**
(45) Date of publication and mention of the grant of the patent: **06.05.2020**
(21) Application number: 15201683.8
(22) Date of filing: 21.12.2015
(51) Int. Cl.: H04M 1/67, G06F 21/35, H04W 12/06

(54) **METHOD, APPARATUS FOR CONTROLLING STATE OF TERMINAL SCREEN, AND ELECTRONIC DEVICE**
VERFAHREN, VORRICHTUNG ZUR STEUERUNG DES ZUSTANDS EINES ENDGERÄTEBILDSCHIRMS UND ELEKTRONISCHE VORRICHTUNG
PROCÉDÉ, APPAREIL DE COMMANDE D'ÉTAT D'ÉCRAN DE TERMINAL ET DISPOSITIF ÉLECTRONIQUE

(30) Priority: 20.03.2015 CN 201510126338
(43) Date of publication of application: 05.10.2016
(73) Proprietor: Xiaomi Inc., Beijing 100085 (CN)
(72) Inventor: WANG, Yanteng, 100085 BEIJING (CN); LI, Zhijie, 100085 BEIJING (CN); FAN, Jie, 100085 BEIJING (CN)
(74) Representative: Cabinet Beau de Loménie

(56) References cited:
- EP-A1- 2 648 130
- EP-A1- 2 720 444
- EP-A2- 1 096 722
- WO-A1-2010/064162
- WO-A1-2015/081326
- WO-A2-2005/062236
- US-A1- 2014 325 614

## Description

### TECHNICAL FIELD

The present invention generally relates to technical field of screen locking, and more particularly, to a method and an apparatus for controlling a state of a terminal screen and an electronic device.

### BACKGROUND

In order to avoid an unintended touch by a user, or save an electric quantity of a terminal, it is needed to perform a locking process to a terminal screen, and an unlocking operation may be performed by the user if necessary. In related art, the user needs to press a power button to achieve locking of the terminal screen; and the user needs to perform a click or swipe operation on the terminal screen to achieve unlocking of the terminal screen.

Document WO 2005/062236 discloses a system for identifiying an individual in an electronic transaction.

Document US 2014/0325614 relates to a system for pairing a terminal with an element worn on the wrist or hand of a user, the element comprising a secure element for communicating with the terminal.

Document EP 1 096 722 proposes a system for executing personal authentication processing by communication through a human body in which authentication corresponding to a service to be furnished can be executed efficiently.

Document WO 2010/064162 discloses a secure identification system in which a user gets access through an identification device or badge or tag worn on his/her body, which applies the techniques of body coupled communication.

### SUMMARY

In order to solve the problems existing in the related art, the present invention provides a method and an apparatus for controlling a state of a terminal screen and an electronic device.

According to a first aspect of embodiments of the present invention, there is provided a method for controlling a state of a terminal screen, based on a terminal side, according to claim 1. According to a second aspect of embodiments of the present invention, there is provided a method for controlling a state of a terminal screen based on a wearable device side, according to claim 6. According to a third aspect of embodiments of the present invention, there is provided a an apparatus for controlling a state of a terminal screen based on a terminal side, according to claim 9. According to a fourth aspect of embodiments of the present invention, there is provided a an apparatus for controlling a state of a terminal screen based on a wearable device side, according to claim 12. Another preferred aspects of the embodiments of the present invention being set out in dependent claims 2-5, 7,8,10,11 and 13,14.

The present invention also provides a computer program according to claim 15, which when executing on a processor of a terminal, performs the above method according to any of claims 1-5.

The present invention also provides a computer program according to claim 16, which when executing on a processor of a wearable device, performs the above method according to claims 6-8.

The technical solutions provided by embodiments of the present invention may have the following beneficial effects:
in the present invention, human body communication components are respectively embedded into an inside of the terminal and the wearable device, and the human body communication components are respectively connected to the metal structures on the surface of the terminal and the wearable device. In this way, the user may establish a signal channel between the terminal and the wearable device via a medium of the skin of the user when the user touches the metal structures on the surface of the terminal and the wearable device, and the control to the locking state of the terminal screen is achieved based on the transmission of the electromagnetic signal, thereby it is possible to perform a quick switching control to the locking state of the terminal screen, and contribute to improve safety and reduce power consumption.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for controlling a state of a terminal screen based on a terminal side, according to an exemplary embodiment.
Fig. 2 is a flow chart of a method for controlling a state of a terminal screen based on a wearable device side, according to an exemplary embodiment.
Fig. 3 is a structural schematic diagram of a wearable device, according to an exemplary embodiment.
Fig. 4 is a schematic diagram of achieving a signal transmission by a wearable device, according to an exemplary embodiment.
Fig. 5 is a structural schematic diagram of a terminal, according to an exemplary embodiment.
Fig. 6 is a schematic diagram of achieving a signal transmission between a wearable device and a terminal, according to an exemplary embodiment.
Fig. 7 is a block diagram illustrating an apparatus for controlling a state of a terminal screen based on a terminal side, according to an exemplary embodiment.
Fig. 8 is a block diagram illustrating another apparatus for controlling a state of a terminal screen based on a terminal side, according to an exemplary embodiment.
Fig. 9 is a block diagram illustrating an apparatus for controlling a state of a terminal screen based on a wearable device side, according to an exemplary embodiment.
Fig. 10 is a structural schematic diagram of a device for controlling a state of a terminal screen based on a terminal side, according to an exemplary embodiment.
Fig. 11 is a structural schematic diagram of a device for controlling a state of a terminal screen based on a wearable device side, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

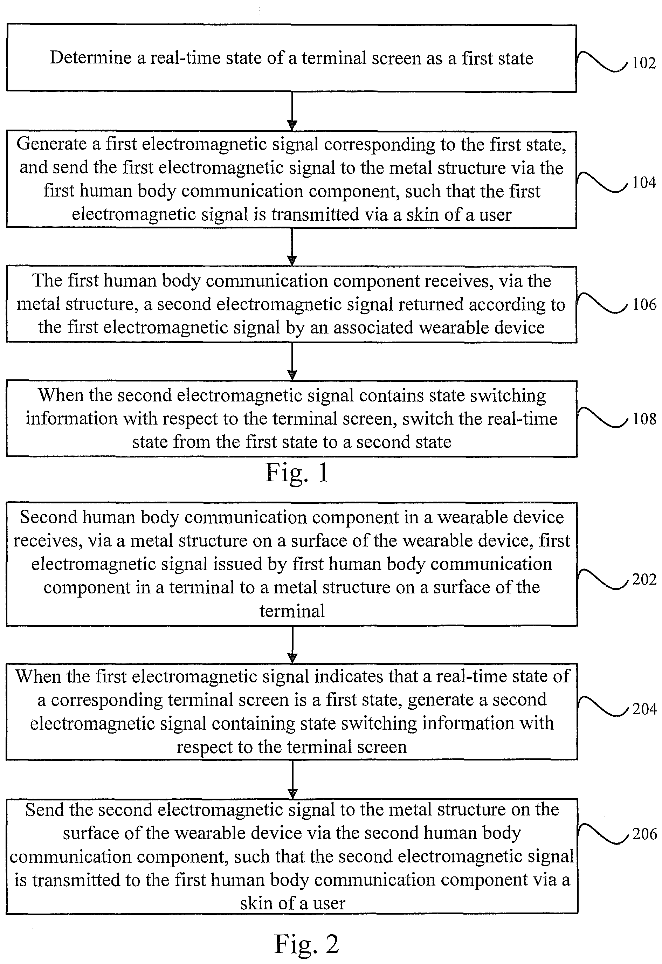

Fig. 1 is a flow chart of a method for controlling a state of a terminal screen implemented on a terminal side, according to an exemplary embodiment. As shown in Fig. 1, the method is applied (executed) in a terminal, and the terminal contains first human body communication component connected with a metal structure on a surface of the terminal. The method may include the following steps.

In step 102, a real-time state of a terminal screen is determined as a first state.

In step 104, a first electromagnetic signal corresponding to the first state is generated, and the first electromagnetic signal is sent to the metal structure via the first human body communication component, such that the first electromagnetic signal is transmitted via a skin of a user.

In the present embodiment, the first electromagnetic signal may contain an identification bit corresponding to a real-time state. For example, when the identification bit is "0", it indicates that the real-time state is the first state; and when the identification bit is "1", it indicates that the real-time state is the second state. The first electromagnetic signal may contain other information, which is not limited by the present invention.

In the present embodiment, since the first human body communication component in the terminal is connected with the metal structure on the surface of the terminal, when the first human body communication component sends the first electromagnetic signal to the metal structure periodically, if the user contacts the metal structure (or a distance between a skin of the user and the metal structure is smaller than or equal to a predefined distance), a path is formed among the first human body communication component, the metal structure and an area of human body, such as the skin of the user, such that the user may transmit the first electromagnetic signal.

In the present embodiment, the metal structure on the surface of the terminal may be a metal casing or a part thereof, a metal frame or a part thereof, a metal Logo of the terminal, or the like, and the metal structure may be located at a position which is not easily touched by the user when normally using the terminal, so as to avoid an unintended touch to the metal structure.

In step 106, the first human body communication component receives, via the metal structure, a second electromagnetic signal returned according to the first electromagnetic signal by an associated wearable device.

In the present embodiment, with the transmission of the electromagnetic signal by the human body, the first human body communication component in the terminal may receive the second electromagnetic signal returned by the wearable device for performing a switching control to the real-time state of the terminal.

In step 108, when the second electromagnetic signal contains therein state switching information with respect to the terminal screen, the real-time state is switched from the first state to a second state.

In the present embodiment, as an illustrative implementation manner, the first state may be a locking state and the second state is an unlocking state, then the unlocking control to the terminal screen is achieved by the above-mentioned manner; and as another illustrative implementation manner, the first state may be an unlocking state and the second state is a locking state, then the locking control to the terminal screen is achieved by the above-mentioned manner.

In the present embodiment, when the first state is a locking state and the second state is an unlocking state, the state switching information may include: an unlocking password and first identification information, the first identification information being for notifying the terminal to switch the real-time state from the first state to the second state.

Alternatively, when the first state is an unlocking state and the second state is a locking state, the state switching information includes: second identification information, the second identification information being for notifying the terminal to switch the real-time state from the first state to the second state.

Correspondingly, Fig. 2 is a flow chart of a method for controlling a state of a terminal screen on a wearable device side, according to an exemplary embodiment. As shown in Fig. 2, the method is used in a wearable device, and may include the following steps.

In step 202, second human body communication component in a wearable device receives, via a metal structure on a surface of the wearable device, first electromagnetic signal issued by first human body communication component in a terminal to a metal structure on a surface of the terminal.

In the present embodiment, the wearable device may be a smart bracelet, a smart ring, smart glasses and the like. The present invention does not restrict the style and structure of the wearable device, as long as the metal structure on the surface of the wearable device may touch the skin of the user or keep an interval smaller than or equal to a predetermined distance from the skin of the user after the user wears the wearable device, so as to ensure the transmission of the electromagnetic signal.

In step 204, when the first electromagnetic signal indicates that a real-time state of a corresponding terminal screen is a first state, a second electromagnetic signal containing state switching information with respect to the terminal screen is generated.

In the present embodiment, when the first state is a locking state and the second state is an unlocking state, the state switching information includes: an unlocking password and first identification information, the first identification information being for notifying the terminal to switch the real-time state from the first state to the second state.

Alternatively, when the first state is an unlocking state and the second state is a locking state, the state switching information includes: second identification information, the second identification information being for notifying the terminal to switch the real-time state from the first state to the second state.

In the present embodiment, the second electromagnetic signal may further include identity information for indicating an association relationship between the wearable device and the terminal. For example, the terminal and the wearable device need to establish an association relationship therebetween by an aforehand matching operation, and during the matching, the above-mentioned identity information may be generated and stored in the terminal and the wearable device, for instance, the identity information may be a series of validation characters. Then when receiving the second electromagnetic signal, the terminal may compare the identity information in the second electromagnetic signal with the identity information stored locally, and if they are matched, it is judged that the second electromagnetic signal is from the associated wearable device, otherwise the second electromagnetic signal is directly discarded.

In step 206, the second electromagnetic signal is sent to the metal structure on the surface of the wearable device via the second human body communication component, such that the second electromagnetic signal is transmitted to the first human body communication component via a skin of a user.

From the above-mentioned embodiments, in the present invention, human body communication components are respectively embedded into an inside of the terminal and the wearable device, and the human body communication components are respectively connected to the metal structures on the surface of the terminal and the wearable device, in this way, the user may establish a signal channel between the terminal and the wearable device via a medium of the skin of the user when the user touches the metal structures on the surface of the terminal and the wearable device, and the control to the locking state of the terminal screen is achieved based on the transmission of the electromagnetic signal, thereby it is possible to perform a quick switching control to the locking state of the terminal screen, and contribute to improve safety and reduce power consumption.

Hereinafter, the technical solutions of the present invention will be described in combination with specific application scenes of the wearable device and the terminal.

### 1. Wearable device

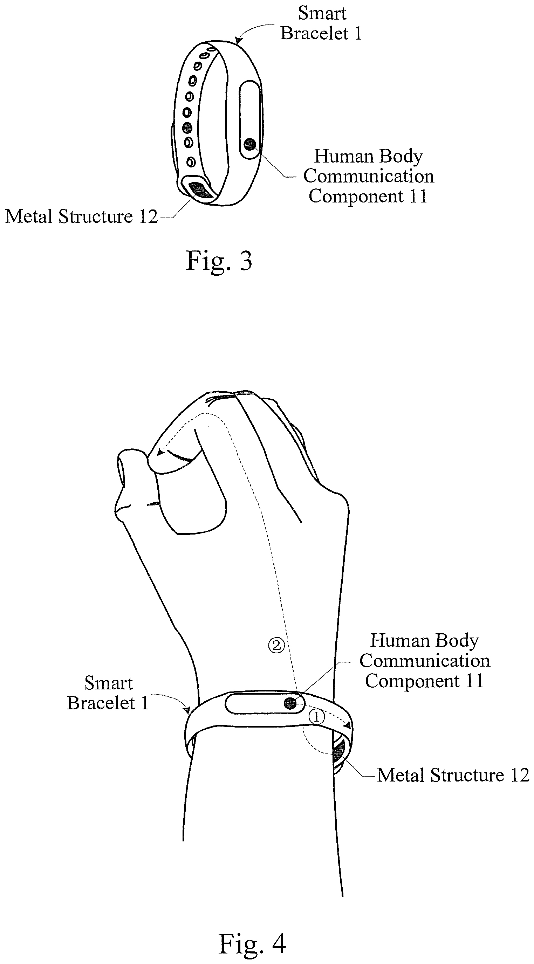

Fig. 3 is a structural schematic diagram of a wearable device, according to an exemplary embodiment. As shown in Fig. 3, the wearable device of the present invention may be a smart bracelet 1. The smart bracelet 1 includes a first human body communication component 11, which may transmit and receive an electromagnetic signal so as to ensure transmission of the electromagnetic signal. Meanwhile, a surface of the smart bracelet 1 is provided with a metal structure 12. For example, the metal structure 12 shown in Fig. 3 may be a metal sheet, and the metal sheet is connected to the human body communication component 11 via a wire inside the smart bracelet 1.

As shown in Fig. 4, when the user wears the smart bracelet 1 on his/her wrist, the metal structure 12 contacts a skin of the wrist of the user (or keeps an interval smaller than or equal to a predetermined distance therefrom), thus a communication path of "human body communication component 11 - metal structure 12 - skin of user" is formed so as to ensure transmission of the electromagnetic signal. For example, after the human body communication component 11 generates an electromagnetic signal, the electromagnetic signal is transmitted by the following manners: ① after the human body communication component 11 transmits an electromagnetic signal, the electromagnetic signal is transmitted to the metal structure 12 along an inner wire of the smart bracelet 1; and ② the electromagnetic signal is transmitted to the skin of wrist of the user via the metal structure 12 and transmitted to the whole body, such as a forefinger shown in Fig. 4, along the skin.

### 2. Terminal

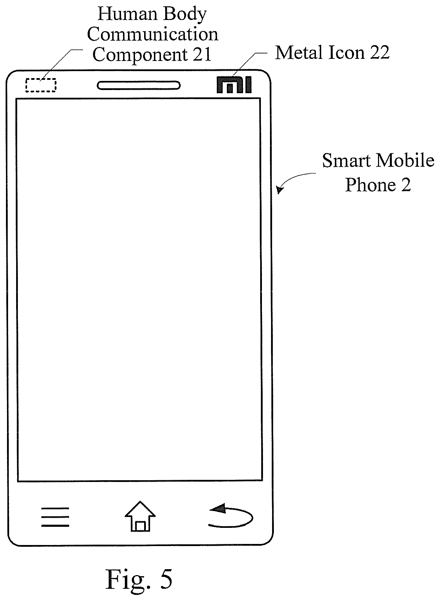

Fig. 5 is a structural schematic diagram of a terminal, according to an exemplary embodiment. As shown in Fig. 5, the terminal in the present invention may be a smart mobile phone 2. The smart mobile phone 2 includes a human body communication component 21, which is similar to the human body communication component 11 shown in Fig. 3 and may transmit and receive an electromagnetic signal so as to ensure transmission of the electromagnetic signal. Meanwhile, a surface of the smart mobile phone 2 is provided with a metal icon 22. For example, the metal icon 22 shown in Fig. 5 may be a metal Logo, and the metal Logo is connected to the human body communication component 21 via a wire inside the smart mobile phone 2. Certainly, the metal icon 22 may be other forms on the surface of the smart mobile phone 2, such as a metal frame, and a metal backboard, which is not restricted by the present invention.

### 3. Cooperation of the wearable device and the terminal

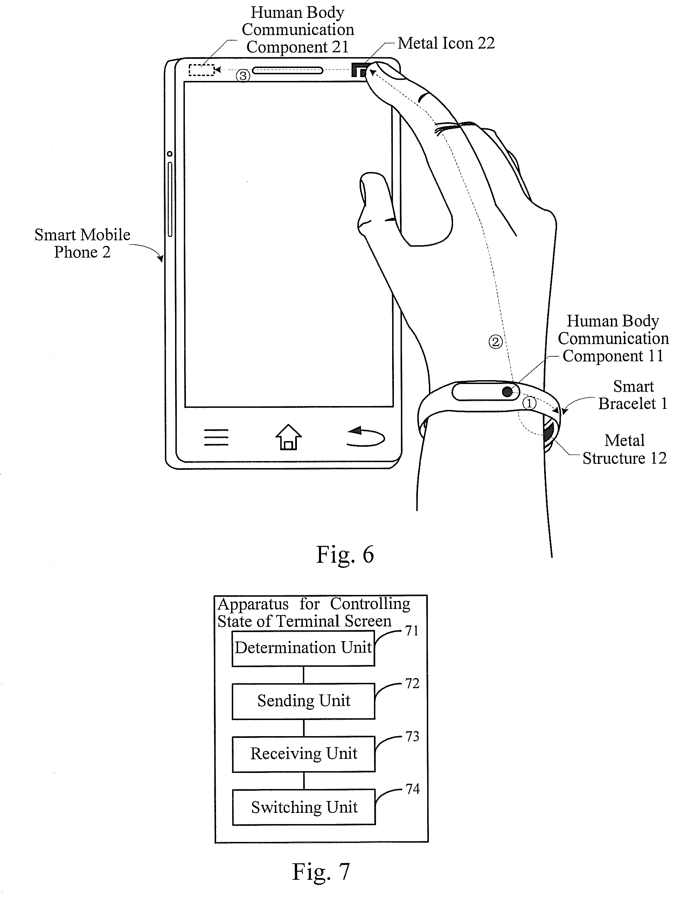

Fig. 6 is a schematic diagram of achieving a signal transmission between a wearable device and a terminal, according to an exemplary embodiment. As shown in Fig. 6, assuming that the user wears the smart bracelet 1 shown in Fig. 3 and uses the smart mobile phone 2 shown in Fig. 5, the following manners may be adopted to perform a switching control to a real-time state of the smart mobile phone 2:
1) A matching between the smart bracelet 1 and the smart mobile phone 2 is achieved in advance. After the matching is completed, the smart bracelet 1 will store therein with an unlocking password of the smart mobile phone 2, and both the smart bracelet 1 and the smart mobile phone 2 store identity validation information.
   Certainly, if the safety requirement is relatively low, i.e., it is not needed to validate an identity of the smart bracelet 1, then operations relating to "identity validation information" in the step may be omitted.
2) When needing to control the smart mobile phone 2, the user contacts or approaches (an interval distance is smaller than or equal to a predetermined distance) the metal icon 22 on the smart mobile phone 2, and the switching control of the real-time state is completed.

First, after the complete of the matching, the smart mobile phone 2 may check its real-time state, and periodically transmit a first electromagnetic signal to the metal icon 22, the first electromagnetic signal corresponding to the real-time state. When the user touches the metal icon 22, for example in Fig. 6, the user touches the metal icon 22 by his/her forefinger, the human body of the user functions as a transmission medium to form an electromagnetic signal transmission path of "smart mobile phone 2 -human body of user - smart bracelet 1". Thereby, the first electromagnetic signal is transmitted to the metal structure 12 of the smart bracelet 1 along the skin of the user, and further transmitted to the human body communication component 11.

Then, after parsing the real-time state corresponding to the first electromagnetic signal, the smart bracelet 1 generates a corresponding second electromagnetic signal, and returns it to the smart mobile phone 2 by the following manners: ① the human body communication component 11 transmits the second electromagnetic signal to the metal structure 12; ② the second electromagnetic signal enters the human body of the user via the metal structure 12, and is transmitted to the metal icon 22 on the smart mobile phone 2 along the forefinger; and ③ the second electromagnetic signal is transmitted to the human body communication component 21 via the metal icon 22, then the human body communication component 12 parses the second electromagnetic signal so as to achieve the switching control of the real-time state.

If the smart mobile phone 2 is in a locking state originally, then the second electromagnetic signal may include: an unlocking password and first identification information, the first identification information being for notifying the smart mobile phone 2 to switch the real-time state from the locking state to the unlocking state; and if the smart mobile phone 2 is in an unlocking state originally, then the second electromagnetic signal may include: second identification information, the second identification information being for notifying the smart mobile phone 2 to switch the real-time state from the unlocking state to the locking state.

Thereby, with the above-mentioned embodiments, the present invention may use the human body as a signal transmission medium, utilize the wearable device to achieve an effective switching control to the real-time state of the terminal screen, which may not only improve the operation efficiency of the screen locking control, but also contribute to improve the safety.

Corresponding to the embodiments relating to method, the present invention also provides embodiments relating to apparatus.

Fig. 7 is a block diagram illustrating an apparatus for controlling a state of a terminal screen based on a terminal side, according to an exemplary embodiment, wherein the terminal contains a first human body communication component connected with a metal structure on a surface of the terminal. With reference to Fig. 7, the apparatus includes a determination unit 71, a sending unit 72, a receiving unit 73, and a switching unit 74.

The determination unit 71 is configured to determine a real-time state of the terminal screen as a first state.

The sending unit 72 is configured to generate a first electromagnetic signal corresponding to the first state, and send the first electromagnetic signal to the metal structure via the first human body communication component, such that the first electromagnetic signal is transmitted via a skin of a user.

The receiving unit 73 is configured to, receive, by the first human body communication component via the metal structure, a second electromagnetic signal returned according to the first electromagnetic signal by an associated wearable device.

The switching unit 74 is configured to, if the second electromagnetic signal includes state switching information of the terminal screen, switch the real-time state from the first state to a second state.

In a variant,
when the first state is a locking state and a second state is an unlocking state, the state switching information includes: an unlocking password and first identification information, the first identification information being for notifying the terminal to switch the real-time state from the first state to the second state.
or, when the first state is an unlocking state and a second state is a locking state, the state switching information includes: second identification information, the second identification information being for notifying the terminal to switch the real-time state from the first state to the second state.

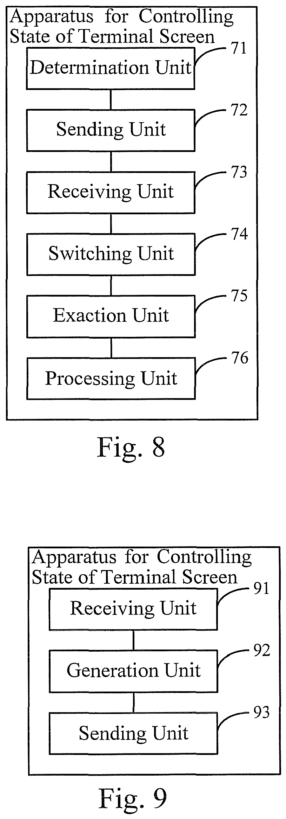

Fig. 8 is a block diagram illustrating another apparatus for controlling a state of a terminal screen based on a terminal side, according to an exemplary embodiment. On the basis of the above-mentioned embodiment shown in Fig. 7, in the embodiment shown in Fig. 8, the apparatus may further include: an extraction unit 75 and a processing unit 76.

The extraction unit 75 is configured to extract identity information contained in the second electromagnetic signal and validate the identity information.

The processing unit 76 is configured to, if the validation is ok, judge that the second electromagnetic signal is from the associated wearable device, otherwise discard the second electromagnetic signal.

Fig. 9 is a block diagram illustrating an apparatus for controlling a state of a terminal screen based on a wearable device side, according to an exemplary embodiment. As shown in Fig. 9, the apparatus includes a receiving unit 91, a generation unit 92, and a sending unit 93.

The receiving unit 91 is configured to receive, by second human body communication component in a wearable device via a metal structure on a surface of the wearable device, first electromagnetic signal issued by first human body communication component in a terminal to a metal structure on a surface of the terminal.

The generation unit 92 is configured to, if the first electromagnetic signal indicates that a real-time state of a corresponding terminal screen is a first state, generate a second electromagnetic signal containing state switching information with respect to the terminal screen.

The sending unit 93 is configured to, send the second electromagnetic signal to the metal structure on the surface of the wearable device via the second human body communication component, such that the second electromagnetic signal is transmitted to the first human body communication component via a skin of a user.

In a variant,
when the first state is a locking state and a second state is an unlocking state, the state switching information includes: an unlocking password and first identification information, the first identification information being for notifying the terminal to switch the real-time state from the first state to the second state;
or, when the first state is an unlocking state and a second state is a locking state, the state switching information includes: second identification information, the second identification information being for notifying the terminal to switch the real-time state from the first state to the second state.

In a variant, the second electromagnetic signal further includes: identity information corresponding to the wearable device.

With respect to the devices in the above embodiments, the specific manners for performing operations for individual modules therein have been described in detail in the embodiments regarding the methods, which will not be elaborated herein.

For device embodiments, since the device embodiments are substantially corresponding to the method embodiments, the relevant contents may be referred to some explanations in the method embodiments. The units illustrated as separate components may be or may not be separated physically, the component used as a unit display may be or may not be a physical unit, i.e., may be located at one location, or may be distributed into multiple network units. A part or all of the modules may be selected to achieve the purpose of the solution in the present invention according to actual requirements. The person skilled in the art can understand and implement the present invention without paying inventive labor.

Correspondingly, the present invention also provides an apparatus for controlling a state of a terminal screen based on a terminal side, the apparatus includes: a processor; and a memory for storing instructions executable by the processor; wherein the processor is configured to: determine a real-time state of the terminal screen as a first state; generate a first electromagnetic signal corresponding to the first state, and send the first electromagnetic signal to the metal structure via the first human body communication component, such that the first electromagnetic signal is transmitted via a skin of a user; receive, by the first human body communication component via the metal structure, a second electromagnetic signal returned according to the first electromagnetic signal by an associated wearable device; and if the second electromagnetic signal includes state switching information of the terminal screen, switch the real-time state from the first state to a second state.

Correspondingly, the present invention also provides a terminal, the terminal includes: a processor; and one or more program, wherein the one or more programs is stored in a memory, and instructions for carrying out the following operations contained in the one or more programs are configured to by performed by one or more processor: determine a real-time state of the terminal screen as a first state; generate a first electromagnetic signal corresponding to the first state, and send the first electromagnetic signal to the metal structure via the first human body communication component, such that the first electromagnetic signal is transmitted via a skin of a user; receive, by the first human body communication component via the metal structure, a second electromagnetic signal returned according to the first electromagnetic signal by an associated wearable device; and if the second electromagnetic signal includes state switching information of the terminal screen, switch the real-time state from the first state to a second state.

Correspondingly, the present invention also provides an apparatus for controlling a state of a terminal screen based on a wearable device side, the apparatus includes: a processor; and a memory for storing instructions executable by the processor; wherein the processor is configured to: receive, by second human body communication component in a wearable device via a metal structure on a surface of the wearable device, first electromagnetic signal issued by first human body communication component in a terminal to a metal structure on a surface of the terminal; if the first electromagnetic signal indicates that a real-time state of a corresponding terminal screen is a first state, generate a second electromagnetic signal containing state switching information with respect to the terminal screen; and send the second electromagnetic signal to the metal structure on the surface of the wearable device via the second human body communication component, such that the second electromagnetic signal is transmitted to the first human body communication component via a skin of a user.

Correspondingly, the present invention also provides a wearable device, the wearable device includes: a processor; and one or more program, wherein the one or more programs is stored in a memory, and instructions for carrying out the following operations contained in the one or more programs are configured to by performed by one or more processor: receive, by second human body communication component in a wearable device via a metal structure on a surface of the wearable device, first electromagnetic signal issued by first human body communication component in a terminal to a metal structure on a surface of the terminal; if the first electromagnetic signal indicates that a real-time state of a corresponding terminal screen is a first state, generate a second electromagnetic signal containing state switching information with respect to the terminal screen; and send the second electromagnetic signal to the metal structure on the surface of the wearable device via the second human body communication component, such that the second electromagnetic signal is transmitted to the first human body communication component via a skin of a user.

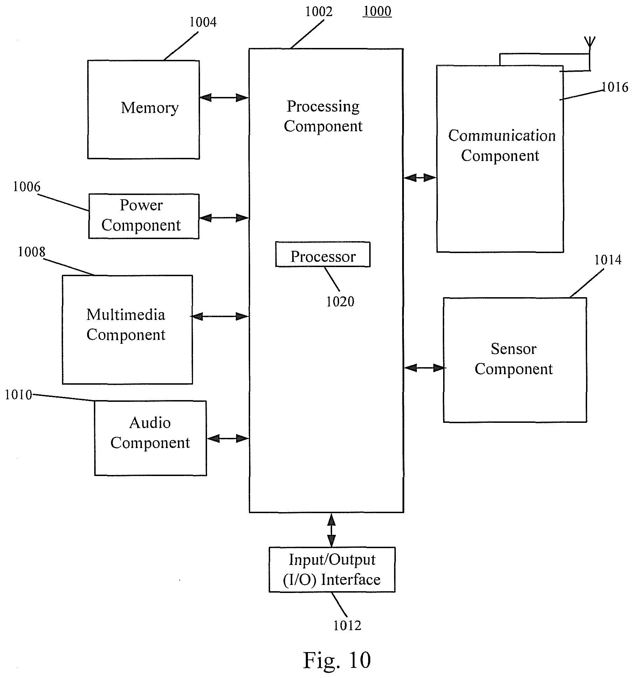

Fig. 10 is a block diagram of a device 1000 for controlling a state of a terminal screen based on a terminal side, according to an exemplary embodiment. For example, the device 1000 may be a mobile phone, a computer, a digital broadcast terminal, a messaging device, a gaming console, a tablet, a medical device, exercise equipment, a personal digital assistant, and the like.

Referring to Fig. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1004, executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

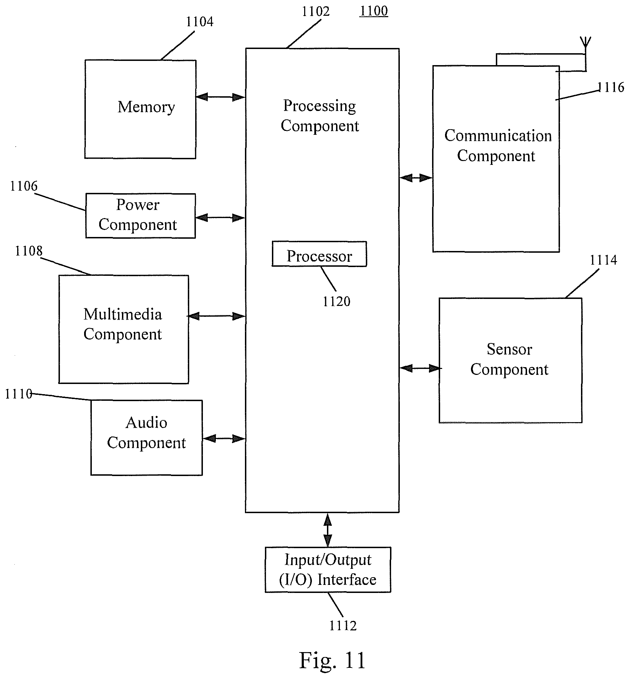

Fig. 11 is a structural schematic diagram of a device 1100 for controlling a state of a terminal screen based on a wearable device side, according to an exemplary embodiment. For example, the device 1100 may be wearable devices such as a smart bracelet, a smart ring, and smart glasses.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

## Claims

1. A method for controlling a state of a terminal screen, wherein the terminal comprises a first human body communication component (21) connected with a metal structure (22) on a surface of the terminal, the method comprises:
determining (102) a real-time state of the terminal screen as a first state;
generating a first electromagnetic signal corresponding to the first state, and sending the first electromagnetic signal to the metal structure (22) by the first human body communication component (21), such that the first electromagnetic signal is transmitted via a skin of a user (104) to an associated wearable device comprising a second human body communication component (11) connected with a metal structure (12) on a surface of the wearable device when the user touches the metal structures (22,12) on the surface of the terminal and on the surface of the wearable device ;
receiving (106), by the first human body communication component (21) via the metal structure (22), a second electromagnetic signal returned according to the first electromagnetic signal by the associated wearable device via the skin of the user; and
if the second electromagnetic signal comprises state switching information of the terminal screen, switching (108) the real-time state from the first state to a second state.

2. The method of claim 1 wherein the first electromagnetic signal is sent by the first human body communication component (21) to the metal structure (22) of the terminal periodically.

3. The method of claim 1 wherein the first electromagnetic signal indicates the real-time state of the terminal screen.

4. The method of claim 1, wherein
if the first state is a locking state and the second state is an unlocking state, the state switching information comprises: an unlocking password and first identification information, the first identification information being for notifying the terminal to switch the real-time state from the first state to the second state;
or,
if the first state is an unlocking state and the second state is a locking state, the state switching information comprises: second identification information, the second identification information being for notifying the terminal to switch the real-time state from the first state to the second state.

5. The method of claim 1, further comprising:
extracting identity information contained in the second electromagnetic signal and validating the identity information; and
if the validation is ok, judging that the second electromagnetic signal is from the associated wearable device, and if the second electromagnetic signal is not from the associated wearable device, discarding the second electromagnetic signal.

6. A method for controlling a state of a terminal screen, comprising:
receiving (202), by a second human body communication component (11) in a wearable device via a metal structure (12) on a surface of the wearable device, first electromagnetic signal issued by a first human body communication component (21) in a terminal to a metal structure (22) on a surface of the terminal, the first electromagnetic signal being transmitted to the wearable device via a skin of a user of the wearable device when the user touches the metal structures (22,12) on the surface of the terminal and on the surface of the wearable device;
if the first electromagnetic signal indicates that a real-time state of a corresponding terminal screen is a first state, generating (204) a second electromagnetic signal containing state switching information with respect to the terminal screen; and
sending (206) the second electromagnetic signal to the metal structure (12) on the surface of the wearable device by the second human body communication component (11), such that the second electromagnetic signal is transmitted to the first human body communication component (21) via the skin of the user.

7. The method of claim 6, wherein
if the first state is a locking state and a second state is an unlocking state, the state switching information comprises: an unlocking password and first identification information, the first identification information being for notifying the terminal to switch the real-time state from the first state to the second state;
or,
if the first state is an unlocking state and a second state is a locking state, the state switching information comprises: second identification information, the second identification information being for notifying the terminal to switch the real-time state from the first state to the second state.

8. The method of claim 6, wherein the second electromagnetic signal further comprises: identity information corresponding to the wearable device.

9. An apparatus for controlling a state of a terminal screen, wherein the terminal comprises a first human body communication component (21) connected with a metal structure (22) on a surface of the terminal, the apparatus comprises:
a determination unit (71) configured to determine a real-time state of the terminal screen as a first state;
a sending unit (72) configured to generate a first electromagnetic signal corresponding to the first state, and send the first electromagnetic signal to the metal structure (22) by the first human body communication component (21), such that the first electromagnetic signal is transmitted via a skin of a user to an associated wearable device comprising a second human body communication component (11) connected with a metal structure (12) on a surface of the wearable device when the user touches the metal structures (22,12) on the surface of the terminal and on the surface of the wearable device;
a receiving unit (73) configured to, receive, by the first human body communication component (21) via the metal structure (22), a second electromagnetic signal returned according to the first electromagnetic signal by the associated wearable device via the skin of the user; and
a switching unit (74) configured to, if the second electromagnetic signal comprises state switching information of the terminal screen, switch the real-time state from the first state to a second state.

10. The apparatus of claim 9, wherein
if the first state is a locking state and the second state is an unlocking state, the state switching information comprises: an unlocking password and first identification information, the first identification information being for notifying the terminal to switch the real-time state from the first state to the second state;
or,
if the first state is an unlocking state and the second state is a locking state, the state switching information comprises: second identification information, the second identification information being for notifying the terminal to switch the real-time state from the first state to the second state.

11. The apparatus of claim 9, further comprising:
an extraction unit (75) configured to extract identity information contained in the second electromagnetic signal and validate the identity information; and
a processing unit (76) configured to, if the validation is ok, judge that the second electromagnetic signal is from the associated wearable device, otherwise discard the second electromagnetic signal.

12. An apparatus for controlling a state of a terminal screen, comprising:
a receiving unit (91) configured to receive, by a second human body communication component (11) in a wearable device via a metal structure (12) on a surface of the wearable device, first electromagnetic signal issued by a first human body communication component (21) in a terminal to a metal structure (22) on a surface of the terminal, the first electromagnetic signal being transmitted to the wearable device via a skin of a user of the wearable device when the user touches the metal structures (22,12)
on the surface of the terminal and on the surface of the wearable device;
a generation unit (92) configured to, if the first electromagnetic signal indicates that a real-time state of a corresponding terminal screen is a first state, generate a second electromagnetic signal containing state switching information with respect to the terminal screen; and
a sending unit (93) configured to, send the second electromagnetic signal to the metal structure (12) on the surface of the wearable device by the second human body communication component (11), such that the second electromagnetic signal is transmitted to the first human body communication component (21) via the skin of the user.

13. The apparatus of claim 12, wherein
if the first state is a locking state and a second state is an unlocking state, the state switching information comprises: an unlocking password and first identification information, the first identification information being for notifying the terminal to switch the real-time state from the first state to the second state;
or,
if the first state is an unlocking state and a second state is a locking state, the state switching information comprises: second identification information, the second identification information being for notifying the terminal to switch the real-time state from the first state to the second state.

14. The apparatus of claim 12, wherein the second electromagnetic signal further comprises: identity information corresponding to the wearable device.

15. A computer program, which when executing on a processor of a terminal, performs a method according to any one of claims 1 to 5.

16. A computer program, which when executing on a processor of a wearable device, performs a method according to any one of claims 6 to 8.

## Patentansprüche

1. Verfahren zum Steuern eines Zustands eines Terminalbildschirms, wobei das Terminal eine erste Komponente (21) zur Kommunikation mit dem menschlichen Körper umfasst, die mit einer Metallstruktur (22) auf einer Oberfläche des Terminals verbunden ist, wobei das Verfahren umfasst:
Bestimmen (102) eines Echtzeitzustands des Terminalbildschirms als einen ersten Zustand,
Erzeugen eines ersten elektromagnetischen Signals, das dem ersten Zustand entspricht, und Senden des ersten elektromagnetischen Signals an die Metallstruktur (22) durch die erste Komponente (21) zur Kommunikation mit dem menschlichen Körper derart, dass das erste elektromagnetische Signal über die Haut eines Benutzers (104) an eine zugehörige tragbare Vorrichtung übertragen wird, die eine zweite Komponente (11) zur Kommunikation mit dem menschlichen Körper umfasst, die mit einer Metallstruktur (12) auf einer Oberfläche der tragbaren Vorrichtung verbunden ist, wenn der Benutzer die Metallstrukturen (22, 12) auf der Oberfläche des Terminals und auf der Oberfläche der tragbaren Vorrichtung berührt,
Empfangen (106) durch die erste Komponente (21) zur Kommunikation mit dem menschlichen Körper über die Metallstruktur (22) eines zweiten elektromagnetischen Signals, das gemäß dem ersten elektromagnetischen Signal von der zugehörigen tragbaren Vorrichtung über die Haut des Benutzers zurückgegeben wird, und
wenn das zweite elektromagnetische Signal Zustandsumschaltinformationen des Terminalbildschirms umfasst, Umschalten (108) des Echtzeitzustands von dem ersten Zustand in einen zweiten Zustand.

2. Verfahren nach Anspruch 1, wobei das erste elektromagnetische Signal von der ersten Komponente (21) zur Kommunikation mit dem menschlichen Körper periodisch an die Metallstruktur (22) des Terminals gesendet wird.

3. Verfahren nach Anspruch 1, wobei das erste elektromagnetische Signal den Echtzeitzustand des Terminalbildschirms anzeigt.

4. Verfahren nach Anspruch 1, wobei,
wenn der erste Zustand ein Verriegelungszustand ist und der zweite Zustand ein Entriegelungszustand ist, die Zustandsumschaltinformationen umfassen: ein Entriegelungskennwort und erste Identifikationsinformationen, wobei die ersten Identifikationsinformationen dazu dienen, das Terminal zu benachrichtigen, den Echtzeitzustand von dem ersten Zustand in den zweiten Zustand umzuschalten,
oder,
wenn der erste Zustand ein Entriegelungszustand ist und der zweite Zustand ein Verriegelungszustand ist, die Zustandsumschaltinformationen umfassen: zweite Identifikationsinformationen, wobei die zweiten Identifikationsinformationen dazu dienen, das Terminal zu benachrichtigen, den Echtzeitzustand von dem ersten Zustand in den zweiten Zustand umzuschalten.

5. Verfahren nach Anspruch 1, ferner umfassend:
Extrahieren von Identitätsinformationen, die in dem zweiten elektromagnetischen Signal enthalten sind, und Validieren der Identitätsinformationen, und
wenn die Validierung in Ordnung ist, Beurteilen, ob das zweite elektromagnetische Signal von der zugehörigen tragbaren Vorrichtung stammt, und wenn das zweite elektromagnetische Signal nicht von der zugehörigen tragbaren Vorrichtung stammt, Verwerfen des zweiten elektromagnetischen Signals.

6. Verfahren zum Steuern eines Zustands eines Terminalbildschirms, umfassend:
Empfangen (202) durch eine zweite Komponente (11) zur Kommunikation mit dem menschlichen Körper in einer tragbaren Vorrichtung über eine Metallstruktur (12) auf einer Oberfläche der tragbaren Vorrichtung eines ersten elektromagnetischen Signals, das von einer ersten Komponente (21) zur Kommunikation mit dem menschlichen Körper in einem Terminal an eine Metallstruktur (22) auf einer Oberfläche des Terminals ausgegeben wird, wobei das erste elektromagnetische Signal über die Haut eines Benutzers der tragbaren Vorrichtung an die tragbare Vorrichtung übertragen wird, wenn der Benutzer die Metallstrukturen (22, 12) auf der Oberfläche des Terminals und auf der Oberfläche der tragbaren Vorrichtung berührt,
wenn das erste elektromagnetische Signal anzeigt, dass ein Echtzeitzustand eines entsprechenden Terminalbildschirms ein erster Zustand ist, Erzeugen (204) eines zweiten elektromagnetischen Signals, das Zustandsumschaltinformationen in Bezug auf den Terminalbildschirm enthält, und
Senden (206) des zweiten elektromagnetischen Signals an die Metallstruktur (12) auf der Oberfläche der tragbaren Vorrichtung durch die zweite Komponente (11) zur Kommunikation mit dem menschlichen Körper derart, dass das zweite elektromagnetische Signal über die Haut des Benutzers an die erste Komponente (21) zur Kommunikation mit dem menschlichen Körper übertragen wird.

7. Verfahren nach Anspruch 6, wobei,
wenn der erste Zustand ein Verriegelungszustand ist und ein zweiter Zustand ein Entriegelungszustand ist, die Zustandsumschaltinformationen umfassen: ein Entriegelungskennwort und erste Identifikationsinformationen, wobei die ersten Identifikationsinformationen dazu dienen, das Terminal zu benachrichtigen, den Echtzeitzustand von dem ersten Zustand in den zweiten Zustand umzuschalten,
oder,
wenn der erste Zustand ein Entriegelungszustand ist und ein zweiter Zustand ein Verriegelungszustand ist, die Zustandsumschaltinformationen umfassen: zweite Identifikationsinformationen, wobei die zweiten Identifikationsinformationen dazu dienen, das Terminal zu benachrichtigen, den Echtzeitzustand von dem ersten Zustand in den zweiten Zustand umzuschalten.

8. Verfahren nach Anspruch 6, wobei das zweite elektromagnetische Signal ferner umfasst: Identitätsinformationen, die der tragbaren Vorrichtung entsprechen.

9. Gerät zum Steuern eines Zustands eines Terminalbildschirms, wobei das Terminal eine erste Komponente (21) zur Kommunikation mit dem menschlichen Körper umfasst, die mit einer Metallstruktur (22) auf einer Oberfläche des Terminals verbunden ist, wobei das Gerät umfasst:
eine Bestimmungseinheit (71), die dazu ausgestaltet ist, einen Echtzeitzustand des Terminalbildschirms als einen ersten Zustand zu bestimmen,
eine Sendeeinheit (72), die dazu ausgestaltet ist, ein erstes elektromagnetisches Signal zu erzeugen, das dem ersten Zustand entspricht, und das erste elektromagnetische Signal durch die erste Komponente (21) zur Kommunikation mit dem menschlichen Körper an die Metallstruktur (22) derart zu senden, dass das erste elektromagnetische Signal über die Haut eines Benutzers an eine zugehörige tragbare Vorrichtung übertragen wird, die eine zweite Komponente (11) zur Kommunikation mit dem menschlichen Körper umfasst, die mit einer Metallstruktur (12) auf einer Oberfläche der tragbaren Vorrichtung verbunden ist, wenn der Benutzer die Metallstrukturen (22, 12) auf der Oberfläche des Terminals und auf der Oberfläche der tragbaren Vorrichtung berührt,
eine Empfangseinheit (73), die dazu ausgestaltet ist, über die Metallstruktur (22) durch die erste Komponente (21) zur Kommunikation mit dem menschlichen Körper ein zweites elektromagnetisches Signal zu empfangen, das gemäß dem ersten elektromagnetischen Signal von der zugehörigen tragbaren Vorrichtung über die Haut des Benutzers zurückgegeben wird, und
eine Umschalteinheit (74), die dazu ausgestaltet ist, wenn das zweite elektromagnetische Signal Zustandsumschaltinformationen des Terminalbildschirms umfasst, den Echtzeitzustand von dem ersten Zustand in einen zweiten Zustand umzuschalten.

10. Gerät nach Anspruch 9, wobei,
wenn der erste Zustand ein Verriegelungszustand ist und der zweite Zustand ein Entriegelungszustand ist, die Zustandsumschaltinformationen umfassen: ein Entriegelungskennwort und erste Identifikationsinformationen, wobei die ersten Identifikationsinformationen dazu dienen, das Terminal zu benachrichtigen, den Echtzeitzustand von dem ersten Zustand in den zweiten Zustand umzuschalten,
oder,
wenn der erste Zustand ein Entriegelungszustand ist und der zweite Zustand ein Verriegelungszustand ist, die Zustandsumschaltinformationen umfassen: zweite Identifikationsinformationen, wobei die zweiten Identifikationsinformationen dazu dienen, das Terminal zu benachrichtigen, den Echtzeitzustand von dem ersten Zustand in den zweiten Zustand umzuschalten.

11. Gerät nach Anspruch 9, ferner umfassend:
eine Extraktionseinheit (75), die dazu ausgestaltet ist, in dem zweiten elektromagnetischen Signal enthaltene Identitätsinformationen zu extrahieren und die Identitätsinformationen zu validieren, und
eine Verarbeitungseinheit (76), die dazu ausgestaltet ist, zu beurteilen, wenn die Validierung in Ordnung ist, ob das zweite elektromagnetische Signal von der zugehörigen tragbaren Vorrichtung stammt, und andernfalls das zweite elektromagnetische Signal zu verwerfen.

12. Gerät zum Steuern eines Zustands eines Terminalbildschirms, umfassend:
eine Empfangseinheit (91), die dazu ausgestaltet ist, durch eine zweite Komponente (11) zur Kommunikation mit dem menschlichen Körper in einer tragbaren Vorrichtung über eine Metallstruktur (12) auf einer Oberfläche der tragbaren Vorrichtung ein erstes elektromagnetisches Signal zu empfangen, das von einer ersten Komponente (21) zur Kommunikation mit dem menschlichen Körper in einem Terminal an eine Metallstruktur (22) auf einer Oberfläche des Terminals ausgegeben wird, wobei das erste elektromagnetische Signal über die Haut eines Benutzers der tragbaren Vorrichtung an die tragbare Vorrichtung übertragen wird, wenn der Benutzer die Metallstrukturen (22, 12) auf der Oberfläche des Terminals und auf der Oberfläche der tragbaren Vorrichtung berührt,
eine Erzeugungseinheit (92), die dazu ausgestaltet ist, wenn das erste elektromagnetische Signal anzeigt, dass ein Echtzeitzustand eines entsprechenden Terminalbildschirms ein erster Zustand ist, ein zweites elektromagnetisches Signal, das Zustandsumschaltinformationen in Bezug auf den Terminalbildschirm enthält, zu erzeugen, und
eine Sendeeinheit (93), die dazu ausgestaltet ist, das zweite elektromagnetische Signal an die Metallstruktur (12) auf der Oberfläche der tragbaren Vorrichtung durch die zweite Komponente (11) zur Kommunikation mit dem menschlichen Körper derart zu senden, dass das zweite elektromagnetische Signal über die Haut des Benutzers an die erste Komponente (21) zur Kommunikation mit dem menschlichen Körper übertragen wird.

13. Vorrichtung nach Anspruch 12, wobei,
wenn der erste Zustand ein Verriegelungszustand ist und ein zweiter Zustand ein Entriegelungszustand ist, die Zustandsumschaltinformationen umfassen: ein Entriegelungskennwort und erste Identifikationsinformationen, wobei die ersten Identifikationsinformationen dazu dienen, das Terminal zu benachrichtigen, den Echtzeitzustand von dem ersten Zustand in den zweiten Zustand umzuschalten,
oder,
wenn der erste Zustand ein Entriegelungszustand ist und ein zweiter Zustand ein Verriegelungszustand ist, die Zustandsumschaltinformationen umfassen: zweite Identifikationsinformationen, wobei die zweiten Identifikationsinformationen dazu dienen, das Terminal zu benachrichtigen, den Echtzeitzustand von dem ersten Zustand in den zweiten Zustand umzuschalten.

14. Vorrichtung nach Anspruch 12, wobei das zweite elektromagnetische Signal ferner umfasst: Identitätsinformationen, die der tragbaren Vorrichtung entsprechen.

15. Computerprogramm, das bei Ausführung auf einem Prozessor eines Terminals ein Verfahren gemäß einem der Ansprüche 1 bis 5 durchführt.

16. Computerprogramm, das bei Ausführung auf einem Prozessor einer tragbaren Vorrichtung ein Verfahren gemäß einem der Ansprüche 6 bis 8 durchführt.

## Revendications

1. Procédé de commande d'un état d'un écran de terminal, dans lequel le terminal comprend un premier composant de communication de corps humain (21) connecté à une structure métallique (22) sur une surface du terminal, dans lequel le procédé comprend les étapes ci-dessous consistant à :
déterminer (102) un état en temps réel de l'écran de terminal en tant qu'un premier état ;
générer un premier signal électromagnétique correspondant au premier état, et envoyer le premier signal électromagnétique à la structure métallique (22) par le biais du premier composant de communication de corps humain (21), de sorte que le premier signal électromagnétique est transmis, par l'intermédiaire d'une peau d'un utilisateur (104), à un dispositif vestimentaire associé comprenant un second composant de communication de corps humain (11) connecté à une structure métallique (12) sur une surface du dispositif vestimentaire, lorsque l'utilisateur touche les structures métalliques (22, 12) sur la surface du terminal et sur la surface du dispositif vestimentaire ;
recevoir (106), par le biais du premier composant de communication de corps humain (21), par l'intermédiaire de la structure métallique (22), un second signal électromagnétique, renvoyé conformément au premier signal électromagnétique par le dispositif vestimentaire associé par l'intermédiaire de la peau de l'utilisateur ; et
si le second signal électromagnétique comprend des informations de commutation d'état de l'écran de terminal, commuter (108) l'état en temps réel, du premier état à un second état.

2. Procédé selon la revendication 1, dans lequel le premier signal électromagnétique est envoyé périodiquement par le premier composant de communication de corps humain (21) à la structure métallique (22) du terminal.

3. Procédé selon la revendication 1, dans lequel le premier signal électromagnétique indique l'état en temps réel de l'écran de terminal.

4. Procédé selon la revendication 1, dans lequel :
si le premier état est un état de verrouillage, et si le second état est un état de déverrouillage, les informations de commutation d'état comprennent : un mot de passe de déverrouillage et des premières informations d'identification, les premières informations d'identification étant destinées à notifier, au terminal, de commuter l'état en temps réel, du premier état au second état ; ou
si le premier état est un état de déverrouillage, et si le second état est un état de verrouillage, les informations de commutation d'état comprennent : des secondes informations d'identification, les secondes informations d'identification étant destinées à notifier, au terminal, de commuter l'état en temps réel, du premier état au second état.

5. Procédé selon la revendication 1, comprenant en outre les étapes ci-dessous consistant à :
extraire des informations d'identité contenues dans le second signal électromagnétique et valider les informations d'identité ; et
si la validation est correcte, juger que le second signal électromagnétique provient du dispositif vestimentaire associé, et si le second signal électromagnétique ne provient pas du dispositif vestimentaire associé, rejeter le second signal électromagnétique.

6. Procédé de commande de l'état d'un écran de terminal, comprenant les étapes ci-dessous consistant à :
recevoir (202), par le biais d'un second composant de communication de corps humain (11) dans un dispositif vestimentaire, par l'intermédiaire d'une structure métallique (12) sur une surface du dispositif vestimentaire, un premier signal électromagnétique émis par un premier composant de communication de corps humain (21) dans un terminal vers une structure métallique (22) sur une surface du terminal, le premier signal électromagnétique étant transmis au dispositif vestimentaire par l'intermédiaire d'une peau d'un utilisateur du dispositif vestimentaire lorsque l'utilisateur touche les structures métalliques (22, 12) sur la surface du terminal et sur la surface du dispositif vestimentaire ;
si le premier signal électromagnétique indique qu'un état en temps réel d'un écran de terminal correspondant est un premier état, générer (204) un second signal électromagnétique contenant des informations de commutation d'état par rapport à l'écran de terminal ; et
envoyer (206) le second signal électromagnétique à la structure métallique (12) sur la surface du dispositif vestimentaire, par le biais du second composant de communication de corps humain (11), de sorte que le second signal électromagnétique est transmis au premier composant de communication de corps humain (21) par l'intermédiaire de la peau de l'utilisateur.

7. Procédé selon la revendication 6, dans lequel :
si le premier état est un état de verrouillage, et si un second état est un état de déverrouillage, les informations de commutation d'état comprennent : un mot de passe de déverrouillage et des premières informations d'identification, les premières informations d'identification étant destinées à notifier, au terminal, de commuter l'état en temps réel, du premier état au second état ; ou
si le premier état est un état de déverrouillage, et si un second état est un état de verrouillage, les informations de commutation d'état comprennent : des secondes informations d'identification, les secondes informations d'identification étant destinées à notifier, au terminal, de commuter l'état en temps réel, du premier état au second état.

8. Procédé selon la revendication 6, dans lequel le second signal électromagnétique comprend en outre : des informations d'identité correspondant au dispositif vestimentaire.

9. Appareil destiné à commander un état d'un écran de terminal, dans lequel le terminal comprend un premier composant de communication de corps humain (21) connecté à une structure métallique (22) sur une surface du terminal, dans lequel l'appareil comprend :
une unité de détermination (71) configurée de manière à déterminer un état en temps réel de l'écran de terminal en tant qu'un premier état ;
une unité d'envoi (72) configurée de manière à générer un premier signal électromagnétique correspondant au premier état, et à envoyer le premier signal électromagnétique à la structure métallique (22), par le biais du premier composant de communication de corps humain (21), de sorte que le premier signal électromagnétique est transmis, par l'intermédiaire d'une peau d'un utilisateur, à un dispositif vestimentaire associé comprenant un second composant de communication de corps humain (11) connecté à une structure métallique (12), sur une surface du dispositif vestimentaire, lorsque l'utilisateur touche les structures métalliques (22, 12) sur la surface du terminal et sur la surface du dispositif vestimentaire ;
une unité de réception (73) configurée de manière à, recevoir, par le biais du premier composant de communication de corps humain (21), par l'intermédiaire de la structure métallique (22), un second signal électromagnétique renvoyé conformément au premier signal électromagnétique par le dispositif vestimentaire associé, par l'intermédiaire de la peau de l'utilisateur ; et
une unité de commutation (74) configurée de manière à, si le second signal électromagnétique comprend des informations de commutation d'état de l'écran de terminal, commuter l'état en temps réel, du premier état à un second état.

10. Appareil selon la revendication 9, dans lequel :
si le premier état est un état de verrouillage, et si le second état est un état de déverrouillage, les informations de commutation d'état comprennent : un mot de passe de déverrouillage et des premières informations d'identification, les premières informations d'identification étant destinées à notifier, au terminal, de commuter l'état en temps réel, du premier état au second état ; ou
si le premier état est un état de déverrouillage, et si le second état est un état de verrouillage, les informations de commutation d'état comprennent : des secondes informations d'identification, les secondes informations d'identification étant destinées à notifier, au terminal, de commuter l'état en temps réel, du premier état au second état.

11. Appareil selon la revendication 9, comprenant en outre :
une unité d'extraction (75) configurée de manière à extraire des informations d'identité contenues dans le second signal électromagnétique et à valider les informations d'identité ; et
une unité de traitement (76) configurée de manière à, si la validation est correcte, juger que le second signal électromagnétique provient du dispositif vestimentaire associé, et sinon, à rejeter le second signal électromagnétique.

12. Appareil destiné à commander un état d'un écran de terminal, comprenant :
une unité de réception (91) configurée de manière à recevoir, par le biais d'un second composant de communication de corps humain (11) dans un dispositif vestimentaire, par l'intermédiaire d'une structure métallique (12) sur une surface du dispositif vestimentaire, un premier signal électromagnétique émis par un premier composant de communication de corps humain (21) dans un terminal, vers une structure métallique (22) sur une surface du terminal, le premier signal électromagnétique étant transmis au dispositif vestimentaire par l'intermédiaire d'une peau d'un utilisateur du dispositif vestimentaire lorsque l'utilisateur touche les structures métalliques (22, 12) sur la surface du terminal et sur la surface du dispositif vestimentaire ;
une unité de génération (92) configurée de manière à, si le premier signal électromagnétique indique qu'un état en temps réel d'un écran de terminal correspondant est un premier état, générer un second signal électromagnétique contenant des informations de commutation d'état par rapport à l'écran de terminal ; et
une unité d'envoi (93) configurée de manière à envoyer le second signal électromagnétique à la structure métallique (12) sur la surface du dispositif vestimentaire, par le biais du second composant de communication de corps humain (11), de sorte que le second signal électromagnétique est transmis au premier composant de communication de corps humain (21) par l'intermédiaire de la peau de l'utilisateur.

13. Appareil selon la revendication 12, dans lequel :
si le premier état est un état de verrouillage, et si un second état est un état de déverrouillage, les informations de commutation d'état comprennent : un mot de passe de déverrouillage et des premières informations d'identification, les premières informations d'identification étant destinées à notifier, au terminal, de commuter l'état en temps réel, du premier état au second état ; ou
si le premier état est un état de déverrouillage, et si un second état est un état de verrouillage, les informations de commutation d'état comprennent : des secondes informations d'identification, les secondes informations d'identification étant destinées à notifier, au terminal, de commuter l'état en temps réel, du premier état au second état.

14. Appareil selon la revendication 12, dans lequel le second signal électromagnétique comprend en outre : des informations d'identité correspondant au dispositif vestimentaire.

15. Programme informatique qui, lorsqu'il est exécuté sur un processeur d'un terminal, met en œuvre un procédé selon l'une quelconque des revendications 1 à 5.

16. Programme informatique qui, lorsqu'il est exécuté sur un processeur d'un dispositif vestimentaire, met en œuvre un procédé selon l'une quelconque des revendications 6 à 8.
